# EUROPEAN PATENT SPECIFICATION

(11) **EP 0 792 250 B1**
(45) Date of publication and mention of the grant of the patent: **10.02.1999**
(21) Application number: 95939717.5
(22) Date of filing: 31.10.1995
(51) Int. Cl.: C03C 25/02, C08K 3/32, C08F 220/20

(54) **FIBROUS GLASS BINDERS**
BINDEMITTEL FÜR GLASFASERN
LIANTS POUR FIBRES DE VERRE

(30) Priority: 14.11.1994 US 337718
(43) Date of publication of application: 03.09.1997
(73) Proprietor: OWENS CORNING, Toledo, Ohio 43659 (US)
(72) Inventor: LOFTUS, James, E., Newark, OH 43055 (US)
(74) Representative: West, Alan Harry
(86) International application number: US9514233
(87) International publication number: WO9615075

(56) References cited:
- US-A- 5 318 990
- US-A- 5 340 868
- DATABASE WPI Section Ch, Week 9443 Derwent Publications Ltd., London, GB; Class A13, AN 94-348296 & SU,A,1 821 486 ( POLYMERS CHEM TECHN RES INST) , 15 June 1993
- FILE REGISTRY, CAS, Columbus, Ohio, USA Registry numbers: 103138-47-2, 103138-46-1 55719-33-0, 53554-34-0, 39373-34-7, 38639-64-4, 35705-30-7, 27175-46-8

## Description

This invention relates generally to fibrous glass binders. More particularly, the invention is directed to a low viscosity binder for application to a fibrous glass mat, which binder rigidly cures to form a fibrous glass bat having excellent compression recovery characteristics.

Fibrous glass insulation products generally comprise matted glass fibers bonded together by a cured thermoset polymeric material. Molten streams of glass are drawn into fibers of random lengths and blown into a forming chamber where they are randomly deposited as a mat onto a traveling conveyor. The fibers, while in transit in the forming chamber and while still hot from the drawing operation, are sprayed with an aqueous binder. A phenol-formaldehyde binder is currently used throughout the fibrous glass insulation industry. The residual heat from the glass fibers and the flow of air through the fibrous mat during the forming operation are generally sufficient to volatilize a majority of all of the water from the binder, thereby leaving the remaining components of the binder on the fibers as a viscous or semi-viscous high-solids liquid. The coated fibrous mat, which is formed in a compressed state due to the tremendous flow of air through the mat in the forming chamber, is then transferred out of the forming chamber to a transfer zone where the mat vertically expands due to the resiliency of the glass fibers. This vertical expansion is extremely important to the successful manufacture of commercially acceptable fibrous glass thermal or acoustical insulation products. Thereafter, the coated mat is transferred to a curing oven where heated air is blown through the mat to cure the binder and rigidly bond the glass fibers together.

Phenol-formaldehyde binders are widely used because they have a low viscosity in the uncured state, yet form a rigid thermoset polymeric matrix for the glass fibers when cured. A low binder viscosity in the uncured state is required to allow the maximum vertical expansion of the coated mat when it exits the forming chamber. A binder which forms a rigid matrix when cured is required so that a finished fibrous glass thermal or acoustical insulation product, when compressed for packaging and shipping, will recover to its as-made vertical dimension when installed in a building.

Insulation manufacturers have long desired an alternative polymeric binder system for fibrous glass products. However, low molecular weight, low viscosity binders which allow maximum vertical expansion of the mat in the transfer zone generally cure to form a nonrigid plastic matrix in the finished product, thereby reducing the attainable vertical height recovery of the finished insulation product when installed. Conversely, high viscosity binders which generally cure to form a rigid matrix in the finished product do not allow maximum vertical expansion of the coated, uncured mat.

Accordingly, the industry continuously is searching for nonphenol formaldehyde binders having a low viscosity when uncured and structural rigidity when cured.

U.S. Patent No. 5,318,990 discloses a binder which meets this need. The binder comprises a polycarboxy polymer, a monomeric trihydric alcohol, and catalyst comprising an alkali metal salt of a phosphorous-containing organic acid.

U.S. Patent No. 5,340,868 also discloses a low viscosity, nonphenol binder. This binder comprises a polycarboxy polymer, a β-hydroxyalkylamide, and trifunctional monomeric carboxylic acid.

The present invention is based on the discovery of another nonphenol formaldehyde binder having a low viscosity when uncured and structural rigidity when cured. This binder comprises an aqueous solution of a copolymer comprising a reaction product of a polymerizable carboxylic acid or anhydride, or mixtures thereof, and an hydroxy C₂ - C₈ alkyl acrylate or methacrylate, or mixtures thereof, and an alkali metal salt of a phosphorous-containing acid. The binder is useful for fibrous glass insulation.

The binder according to the present invention comprises an aqueous solution of a copolymer consisting of a carboxy containing monomer and a hydroxy alkyl acrylate, and a catalyst. The viscosity of the binder is kept low through use of a low molecular mass copolymer, and provides a maximized vertical expansion of the fibrous glass mat as it exits the forming chamber, similar to the vertical expansion provided by the well-known phenol-formaldehyde binders. Generally, binders of phenol-formaldehyde or of the acrylate type require multiple components or require an extended synthesis process. Surprisingly, it has been discovered that an aqueous solution of a simple copolymer containing both an hydroxy function and a carboxy function in conjunction with a catalyst will maintain low viscosity when applied and will cure into a rigid thermoset.

The copolymer of the present invention comprises a monomer or monomers containing hydroxy and/or carboxy groups. The copolymer preferably contains more than one pendant carboxy group and more than one pendant hydroxy group. The carboxy portion of the copolymer may come from unsaturated carboxylic acid monomers including, but not limited to, acrylic acid, methacrylic acid, crotonic acid, isocrotonic acid, maleic acid, cinnamic acid, 2-methylmaleic acid, itaconic acid, 2-methylitaconic acid, α, β-methyleneglutaric acid and the like. Alternatively, the carboxy containing monomer may come from unsaturated anhydrides including, but not necessarily limited to, maleic anhydride, itaconic anhydride, acrylic anhydride, methacrylic anhydride and the like and mixtures thereof. Preferably, the carboxy containing monomer is acrylic acid.

The hydroxy functional monomers useful for this invention are hydroxy C₂ - C₈ alkyl acrylates or methacrylates. Preferably, the monomers are hydroxy C₂ - C₄ alkylacrylates or methacrylates such as hydroxyethyl, hydroxypropyl, and hydroxybutyl acrylate or methacrylate and mixtures thereof. Methods of copolymerizing these monomers are well known in the chemical art.

The acid containing monomer content of the copolymer may be present at a concentration of from about 10 mole% to 90 mole%. Preferably, the acid containing monomer content of the copolymer is present at a concentration of from 50 mole% to 70 mole%. The hydroxy containing monomer content of the copolymer may be present at a concentration of from about 90 mole% to 10 mole%. Preferably, the hydroxy containing monomer content of the copolymer is present at a concentration of from 50 mole% to 30 mole%.

The copolymer of this invention has an average number molecular weight ranging from greater than zero to less than 30,000.

The copolymer of the present invention may additionally comprise another monomer of one or more vinyl compounds including, but not necessarily limited to, styrene α-methylstyrene, acrylonitrile, methacrylonitrile, methyl acrylate, ethyl acrylate, n-butyl acrylate, isobutyl acrylate, methyl methacrylate, n-butyl methacrylate, isobutyl methacrylate, glycidyl methacrylate, vinyl methyl ether, vinyl acetate and the like. Methods for producing these copolymers are well known in the art.

The catalyst I use comprises an alkali metal salt of a phosphorous-containing inorganic acid; particularly alkali metal salts of phosphorous acid, hypophosphorous acid, and polyphosphoric acids. Examples of such catalysts include, but are not necessarily limited to, sodium hypophosphite, sodium phosphite, potassium phosphite, disodium pyrophosphate, tetrasodium pyrophosphate, sodium tripolyphosphate, sodium hexametaphosphate, potassium phosphate, potassium polymetaphosphate, potassium polyphosphate, potassium tripolyphosphate, sodium trimetaphosphate, and sodium tetrametaphosphate, as well as mixtures thereof.

Preferred catalysts include sodium hypophosphite and sodium phosphite, as well as mixtures thereof.

The carboxy/hydroxy containing copolymer and alkali metal salt may be mixed in any conventional mixing device. Based on the combined weight of the copolymer and alkali metal salt, the amount of alkali metal salt varies over wide limits from about 1% to about 15% by weight. Preferably, the amount may vary from about 4% to about 8% by weight. Water may be added to the mixture in any amount which would produce an aqueous binder having a viscosity and a flow rate suitable for its application to a forming fibrous glass mat by any convenient method, such as spraying. Conveniently, water may comprise up to about 95% by weight of the binder.

The binders of the present invention may optionally contain conventional adjuvants such as, for example, coupling agents, dyes, oils, fillers, thermal stabilizers, flame retarding agents, lubricants, and the like, in conventional amounts generally not exceeding 20% of the weight of the binder.

In operation, the inventive binder is applied to glass fibers as they are being produced and formed into a mat, water is volatilized from the binder, and the high-solids binder-coated fibrous glass mat is heated to cure the binder and thereby produce a finished fibrous glass bat which may be used as a thermal or acoustical insulation product, a reinforcement for a subsequently produced composite, etc.

The industry generally produces a porous mat of fibrous glass by fiberizing molten glass and immediately forming a fibrous glass mat on a moving conveyor. Glass is melted in a tank and supplied to a fiber forming device such as a spinner or a bushing. Fibers of glass are attenuated from the device and are blown generally downwardly within a forming chamber. The glass fibers typically have a diameter from about 2 to about 9 microns and have a length from about ¼ inch (6.4 mm) to about 3 inches (76 mm). Preferably, the glass fibers range in diameter from about 3 to about 6 microns, and have a length from about ½ inch (12.7 mm) to about 1½ inches (38 mm). The glass fibers are deposited onto a perforated, endless forming conveyor. The binder is applied to the glass fibers as they are being formed by means of suitable spray applicators so as to result in a distribution of the binder throughout the formed mat of fibrous glass. The glass fibers, having the uncured resinous binder adhered thereto, are gathered and formed into a mat on the endless conveyor within the forming chamber with the aid of a vacuum drawn through the mat from below the forming conveyor. The residual heat contained in the glass fibers, as well as the air flow through the mat, causes a majority of the water to volatilize from the mat before it exits the forming chamber.

As the high-solids resin-coated fibrous glass mat emerges from the forming chamber, it expands vertically due to the resiliency of the glass fibers. The expanded mat is then conveyed to and through a curing oven wherein heated air is passed through the mat to cure the resin. Flights about and below the mat slightly compress the mat to give the finished product a predetermined thickness and surface finish. Typically, the curing oven is operated at a temperature from about 200°C to about 325°C. Preferably, the temperature ranges from about 250°C to about 300°C. Generally, the mat resides within the oven for a period of time from about ½ minute to about 3 minutes. For the manufacture of conventional thermal or acoustical insulation products, the time ranges from about ¾ minute to about 1½ minutes. The fibrous glass having a cured, rigid binder matrix emerges from the oven in the form of a bat which may be compressed for packaging and shipping and which will thereafter substantially fully recover its as-made vertical dimension when unconstrained. By way of example, a fibrous glass mat which is about 1¼ inches (32 mm) thick as it exits from the forming chamber, will expand to a vertical thickness of about 9 inches (229 mm) in the transfer zone, and will be slightly compressed to a vertical thickness of about 6 inches (152 mm) in the curing oven.

### Example 1

An example of a copolymer which may be used as an ingredient for this binder may be prepared as follows:

| Reagent | Weight Used |
|---|---|
| acrylic acid | 125.0 g |
| 2-hydroxyethyl acrylate | 125.0 g |
| sodium hypophosphite hydrate | 0.5 g |
| cupric acetate monohydrate | 0.5 g |
| 30% aqueous hydrogen peroxide | 2.5 g |
| distilled water | 645.0 g |

In a 2 L 3-necked flask fitted with a reflux condenser, a nitrogen inlet, a temperature controller, and an overhead stirrer is added 500 g of distilled water. A solution of the sodium hypophosphite and cupric acetate is prepared in the remaining 145 g of distilled water. The hydrogen peroxide is added and stirred into the solution of cupric acetate and sodium hypophosphite. This solution is added to the 2 L flask.

Nitrogen is sparged through the solution for 15 minutes with oxygen-free nitrogen. The sparge is removed, and the reactor is blanketed with nitrogen. Once the solution is sparged, the monomers are added with stirring.

The solution is heated to 80°C at which time an exotherm occurs. Once the exotherm subsides, heating is continued for three hours at 85°C.

### Example 2

A binder containing the following ingredients is prepared and is applied to fibrous glass as it is formed into a mat.

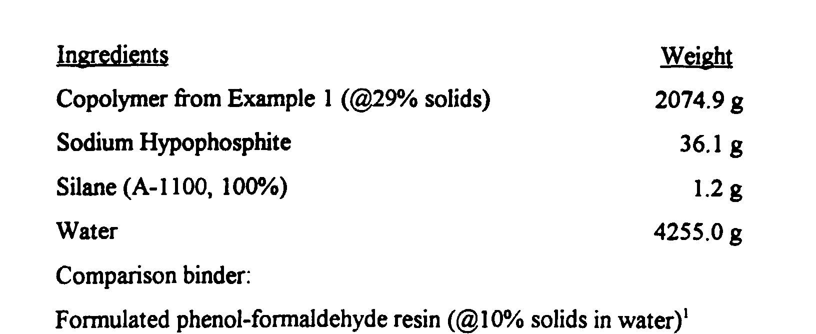

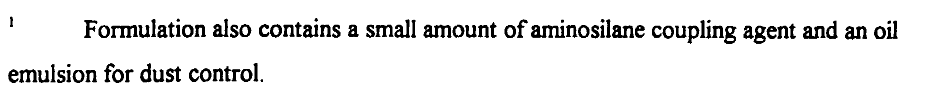

### Example 3

The mats coated with the above two binders vertically expand to approximately the same height as they exit the forming section. Thereafter, the mats are slightly compressed to a nominal thickness of about 8 inches (203 mm) while being cured off-line in a large oven at a temperature of about 185°C. The cured bats exhibit the following recoveries after being compressed for the stated length of time.

| | Recovery (% of nominal thickness) | |
|---|---|---|
| Binder | 24 Hour | 1 Week |
| Example 2 | 89% | 88% |
| Comparison | 90% | 89% |

## Claims

1. A binder composition for a glass fiber material, comprising an aqueous solution of:
a copolymer comprising a reaction product of a polymerizable carboxylic acid or anhydride, or mixtures thereof, and an hydroxy C₂ - C₈ alkyl acrylate or methacrylate, or mixtures thereof; and
an alkali metal salt of a phosphorous-containing acid.

2. A binder composition according to claim 1, wherein the acid component of the copolymer is acrylic acid.

3. A binder composition according to claim 1 or claim 2, wherein the hydroxy component of the copolymer is hydroxyethyl, hydroxypropyl, or hydroxybutyl acrylate or methacrylate.

4. A binder composition according to any one of claims 1 to 3, wherein a nonacid or hydroxy containing monomer is copolymerized with the acid and hydroxy functional monomers.

5. A binder composition according to any one of claims 1 to 4, wherein the alkali metal salt is sodium hypophosphite, sodium phosphite, or a mixture thereof.

6. A binder composition according to any one of claims 1 to 5, wherein the copolymer is constituted by 10 to 90 mole% of the polymerizable acid-containing monomer and 90 to 10 mole% of the polymerizable hydroxy-containing monomer.

7. A binder composition according to claim 6, wherein the copolymer is constituted by about 50 to 70 mole% of the polymerizable acid-containing monomer and 50 to 30 mole% of the polymerizable hydroxy-containing monomer.

8. A binder composition according to any one of claims 1 to 7, wherein the copolymer comprises from 75 to 95% by weight of the anhydrous binder.

9. A binder composition according to any one of claims 1 to 8, which contains the alkali metal salt in an amount of 2 to 15% by weight of the anhydrous binder.

10. A binder composition according to claim 9, which contains the alkali metal salt in an amount of 4 to 8% by weight of the anhydrous binder.

11. A binder composition according to any one of claims 1 to 10, wherein water constitutes up to 95% by weight thereof.

12. A fibrous glass bat, comprising:
glass fibers; and
adhered to the glass fibers, the cured reaction product of a binder composition according to any one of claims 1 to 11.

## Patentansprüche

1. Bindemittelzusammensetzung für ein Glasfasermaterial, enthaltend eine wäßrige Lösung:
eines Copolymers, das ein Polymerisationsprodukt einer polymerisierbaren Carbonsäure oder eines Anhydrids oder eines Gemisches daraus und eines Hydroxy-C₂-C₈-alkylacrylats oder -methacrylats oder eines Gemisches daraus umfaßt; und
eines Alkalimetallsalzes einer phosphorhaltigen Säure.

2. Bindemittelzusammensetzung nach Anspruch 1, wobei es sich bei der Säurekomponente des Copolymers um Acrylsäure handelt.

3. Bindemittelzusammensetzung nach Anspruch 1 oder 2, wobei es sich bei der Hydroxykomponente des Copolymers um Hydroxyethyl-, Hydroxypropyl- oder Hydroxybutylacrylat oder -methacrylat handelt.

4. Bindemittelzusammensetzung nach einem der Ansprüche 1 bis 3, wobei ein nicht säure- oder hydroxyhaltiges Monomer mit den säure- und hydroxyfunktionellen Monomeren copolymerisiert wird.

5. Bindemittelzusammensetzung nach einem der Ansprüche 1 bis 4, wobei es sich bei dem Alkalimetallsalz um Natriumhypophosphit, Natriumphosphit oder ein Gemisch daraus handelt.

6. Bindemittelzusammensetzung nach einem der Ansprüche 1 bis 5, wobei das Copolymer aus 10 bis 90 Mol-% des polymerisierbaren säurehaltigen Monomers und 90 bis 10 Mol-% des polymerisierbaren hydroxyhaltigen Monomers besteht.

7. Bindemittelzusammensetzung nach Anspruch 6, wobei das Copolymer aus etwa 50 bis 70 Mol-% des polymerisierbaren säurehaltigen Monomers und 50 bis 30 Mol-% des polymerisierbaren hydroxyhaltigen Monomers besteht.

8. Bindemittelzusammensetzung nach einem der Ansprüche 1 bis 7, wobei das Copolymer 75 bis 95 Gew.-% des wasserfreien Bindemittels ausmacht.

9. Bindemittelzusammensetzung nach einem der Ansprüche 1 bis 8, die das Alkalimetallsalz in einer Menge von 2 bis 15 Gew.-% des wasserfreien Bindemittels enthält.

10. Bindemittelzusammensetzung nach Anspruch 9, die das Alkalimetallsalz in einer Menge von 4 bis 8 Gew.-% des wasserfreien Bindemittels enthält.

11. Bindemittelzusammensetzung nach einem der Ansprüche 1 bis 10, wobei Wasser bis zu 95 Gew.-% davon ausmacht.

12. Glasfaserplatte, enthaltend:
Glasfasern; und
haftend an den Glasfasern das gehärtete Reaktionsprodukt einer Bindemittelzusammensetzung nach einem der Ansprüche 1 bis 11.

## Revendications

1. Composition liante pour un matériau de fibres de verre, comprenant une solution aqueuse :
d'un copolymère comprenant un produit de la réaction d'un acide ou anhydride carboxylique polymérisable, ou de leurs mélanges, et d'un acrylate ou métacrylate d'hydroxy(alkyle en C₂ à C₈), ou de leurs mélanges ; et
d'un sel d'un métal alcalin d'un acide contenant du phosphore.

2. Composition liante selon la revendication 1, dans laquelle le composant acide du copolymère est l'acide acrylique.

3. Composition liante selon la revendication 1 ou 2, dans laquelle le composant hydroxy du copolymère est l'acrylate ou le métacrylate d'hydroxyéthyle, d'hydroxypropyle ou d'hydroxybutyle.

4. Composition liante selon l'une quelconque des revendications 1 à 3, dans laquelle un monomère non acide, ou hydroxylé, est copolymérisé avec les monomères à fonctionnalité acide et hydroxy.

5. Composition liante selon l'une quelconque des revendications 1 à 4, dans laquelle le sel d'un métal alcalin est l'hypophosphite de sodium, le phosphite de sodium ou un de leurs mélanges.

6. Composition liante selon l'une quelconque des revendications 1 à 5, dans laquelle le copolymère est constitué de 10 à 90 % en moles du monomère polymérisable contenant un acide et de 90 à 10 % en moles du monomère hydroxyle polymérisable.

7. Composition liante selon la revendication 6, dans laquelle le copolymère est constitué d'environ 50 à 70 % en moles du monomère polymérisable contenant un acide et de 5 à 30 % en moles du monomère hydroxylé polymérisable.

8. Composition liante selon l'une quelconque des revendications 1 à 7, dans laquelle le copolymère représente de 75 à 95 % en poids du liant anhydre.

9. Composition liante selon l'une quelconque des revendications 1 à 8, qui contient le sel d'un métal alcalin en une quantité de 2 à 15 % en poids par rapport au liant anhydre.

10. Composition liante selon la revendication 9, qui contient le sel d'un métal alcalin en une quantité de 4 à 8 % en poids par rapport au liant anhydre.

11. Composition liante selon l'une quelconque des revendications 1 à 10, dans laquelle l'eau en représente jusqu'à 95 % en poids.

12. Ouate en feuille à base de fibres de verre, comprenant :
des fibres de verre, et
adhérant aux fibres de verre, le produit de réaction, durci, d'une composition liante selon l'une quelconque des revendications 1 à 11.
